Europäisches Patentamt

European Patent Office

Office européen des brevets

(11) Veröffentlichungsnummer: **0 303 912**
**A2**

(12) **EUROPÄISCHE PATENTANMELDUNG**

(21) Anmeldenummer: 88112749.2

(51) Int. Cl.⁴: **H04R  1/28**

(22) Anmeldetag: 05.08.88

(30) Priorität: 14.08.87 DE 3727098
18.09.87 DE 3731366
27.08.87 DE 3728571

(43) Veröffentlichungstag der Anmeldung:
22.02.89 Patentblatt  89/08

(84) Benannte Vertragsstaaten:
AT BE CH DE ES FR GB GR IT LI LU NL SE

(71) Anmelder: **EWD Electronic-Werke**
**Deutschland GmbH**

**D-7730 Villingen-Schwenningen(DE)**

Anmelder: **Deutsche Thomson-Brandt GmbH**
**Postfach 1307**
**D-7730 Villingen-Schwenningen(DE)**

(72) Erfinder: **Thiele, Karl-Heinz, Dipl.-Phys**
**Lerchenweg 1**
**D-3150 Peine(DE)**
Erfinder: **Einsel, Robert, Dipl.-Ing.**
**Petersburgstrasse 28**
**D-3100 Celle(DE)**
Erfinder: **Wippermann, Horst, Dipl.-Ing.**
**Am Wall 64**
**D-3017 Pattensen(DE)**

(74) Vertreter: **Körner, Peter, Dipl.-Ing.**
**E W D Electronic-Werke Deutschland GmbH**
**Patent- und Lizenzabteilung Göttinger**
**Chaussee 76**
**D-3000 Hannover 91(DE)**

(54) **Tiefton-Lautsprecherbox.**

(57)     2.1. Es soll eine Tiefton-Lautsprecherbox für
niedrige Frequenzen unterhalb 400 Hz, ein sogenanntes Subwoofer-System geschaffen werden, das
bei geringen geometrischen Abmessungen eine besonders gute Wiedergabe tiefer Frequenzen ermöglicht.
      2.2. In einem Gehäuse (3) sind zwei Tiefton-
Lautsprecher (4, 5) und ein beiden Lautsprechern (4,
5) gemeinsamer Passivstrahler (6) angeordnet.
      2.3. Insbesondere für einen Fernsehempfän-
ger mit großen Abmessungen (33"-Bildröhre)

Fig. 1

## Tiefton-Lautsprecherbox

Die Erfindung betrifft eine Tiefton-Lautsprecherbox für einen Fernsehempfänger, eine HiFi-Anlage, ein Kraftfahrzeug oder dgl. sowie einen Fernsehempfänger mit einer derartigen Lautsprecherbox.

Bei hochwertigen Ton-Wiedergabegeräten sind für die einzelnen Frequenzbereiche verschiedene Wiedergabesysteme mit elektromechanischen Wandlern vorgesehen, die über Weichen mit den entsprechenden NF-Tonsignalen gespeist werden. Beispielsweise erfolgt die Abstrahlung sehr tiefer Frequenzen von etwa 20 - 200 Hz mit einem Lautsprechersystem für sehr tiefe Frequenzen, auch Subwoofer genannt, die Abstrahlung des mittleren Frequenzbereiches von etwa 200 Hz bis 4 kHz mit einem Mittelton-System, auch squaker genannt, und die Abstrahlung sehr hoher Frequenzen von 4 kHz bis 20 kHz mit einem sogenannten Hochton-System, auch tweeter genannt.

Bei bestimmten Geräten, z.B. hochwertigen Farbfernsehempfängern mit einem großen Bildschirm mit einer Bildschirmdiagonale von 33" entsprechend ca 84 cm ist eine besonders gute Wiedergabe sehr tiefer Frequenzen mit einem sogenannten Subwoofer gewünscht. Derartige Tieftöner für sehr niedrige Frequenzen erfordern bekanntlich relativ großes Volumen und somit Boxengehäuse mit relativ großen Abmessungen, die bei einem Fernsehempfänger schwer realisierbar sind oder störend wirken.

Der Erfindung liegt die Aufgabe zugrunde, eine Tiefton-Lautsprecherbox für tiefe Frequenzen zu schaffen, die bei relativ kleinen geometrischen Abmessungen des Boxengehäuses eine stark betonte Wiedergabe sehr tiefer Frequenzen ermöglicht und insbesondere für einen Fernsehempfänger mit großen Abmessungen geeignet ist.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgenden Erkenntnissen und Überlegungen Bei tiefen Frequenzen unterhalb 400 Hz ist bekanntlich eine Ortung der Schallquelle durch das menschliche Ohr nicht mehr möglich. Für derartige Frequenzen genügt daher ein sogenannter Passivstrahler in einem gemeinsamen Gehäuse mit zwei Tiefton-Lautsprechern für die Bass-Wiedergabe nach dem Subwoofer-Prinzip. Dadurch wird bei der Sprach- und Musikwiedergabe eine beträchtliche Verbesserung des Klangbildes im tiefen Frequenzbereich von etwa 15 - 200 Hz erreicht. Der Passivstrahler, gebildet durch einen Lautsprecher ohne Magnet und ohne Schwingspule, wird durch die beiden je mit einem NF-Signal gespeisten Lautsprecher pneumatisch angeregt und somit auch als abstrahlende Quelle tätig. Durch den Passivstrahler wird bei relativ kleinen Abmessungen des Boxengehäuses ein relativ großes Volumen simuliert, das die Wiedergabe sehr tiefer Frequenzen begünstigt. Insbesondere entstehen durch das System mit den beiden Lautsprechern und dem Passivstrahler Resonanzen im Bereich von 60 Hz und 120 Hz, die eine gewünschte Pegelanhebung in diesem niedrigen Frequenzbereich und damit eine stark betonte Wiedergabe tiefer Frequenzen nach dem Subwoofer-Prinzip ermöglichen.

Die Erfindung wird anhand der Zeichnung an einem Ausführungsbeispiel erläutert. Darin zeigen

Fig. 1 eine Perspektive eines Fernsehempfängers von hinten mit der erfindungsgemäßen Box,

Fig. 2 ein Detail des Gehäuses nach Fig. 1 mit einer Mittelton-Lautsprecherbox,

Fig. 3 den Impedanzverlauf über der Frequenz für verschiedene Betriebsarten der Lautsprecher,

Fig. 4 ein Beispiel für eine zusätzliche Ausnutzung des Passivstrahlers und

Fig. 5, 6 Beispiele für weitere Anordnungen der Lautsprecher an dem Gehäuse eines Fernsehempfängers.

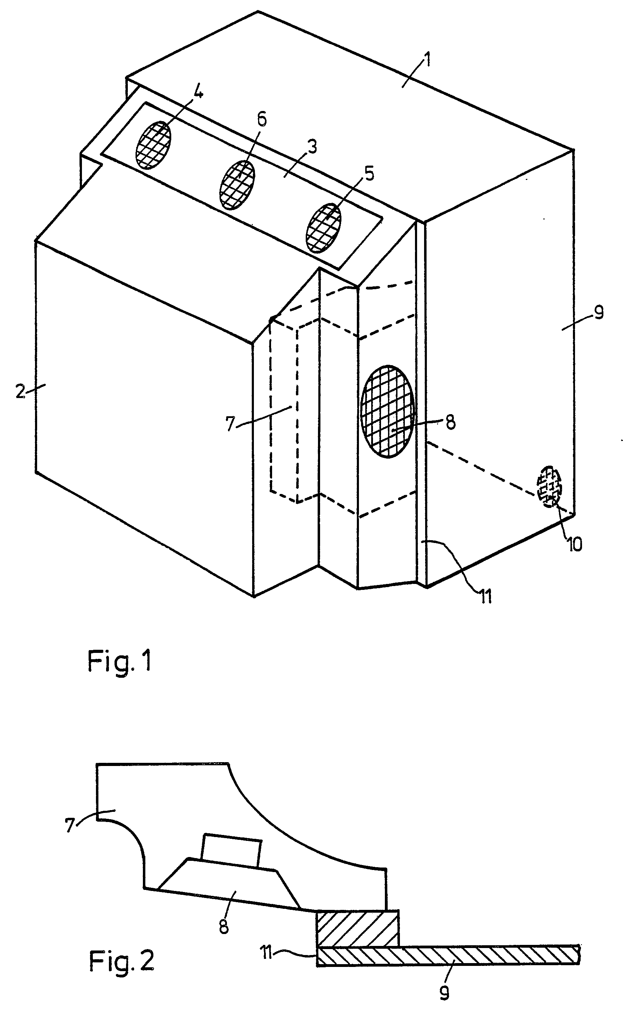

Fig. 1 zeigt das Gehäuse 1 eines Farbfernsehempfängers mit einer Bildröhre mit einer Bildschirmdiagonale von 33". Für die HiFi-Tonwiedergabe sind für getrennte Frequenzbereiche insgesamt drei verschiedene Wiedergabesysteme vorgesehen.

### 1. Unterer Frequenzbereich von 15 - 200 Hz (Subwoofer)

Oberhalb der Rückwand 2 an der oberen hinteren Kante des Gehäuses 1 ist ein Boxengehäuse 3 angebracht. Das Gehäuse 3 enthält zwei Tiefton-Lautsprecher 4, 5 mit einem Durchmesser von 130 mm und einer Konusmembran aus Polypropylen. Die beiden Lautsprecher 4, 5 werden mit den beiden NF-Signalen des linken und rechten Tonkanals für eine Stereowiedergabe gespeist. Zwischen den beiden Lautsprechern 4, 5 ist ein Passivstrahler 6 vorgesehen. Dieser wird gebildet durch einen Lautsprecher, der kein Magnetsystem und keine Schwingspule aufweist. Es erfolgt also keine aktive Steuerung mit einem Signal, sonder lediglich eine pneumatische Anregung der Membran durch den von den Lautsprechern 4, 5 erzeugten Schalldruck. Das Boxengehäuse 3 ist luftdicht abgeschlossen.

Die Abstrahlrichtung der Lautsprecher 4, 5 und des Passivstrahlers 6 ist nach hinten schräg nach oben gerichtet. Die Anordnung des Passivstrahlers 6 in der Mitte des Gehäuses 1 wurde so gewählt, daß sich der Passivstrahler 6 in der unmittelbaren Nähe der Ablenkspule der Fernsehbildröhre befindet. So werden magnetische Wechselwirkungen zwischen Bildröhrensteuerung und Lautsprechermagneten vermieden.

## 2. Mittlerer Frequenzbereich von 200 Hz - 4 kHz, (Midrange-Woofer)

Für den mittleren Frequenzbereich ist zu beiden Seiten des Boxengehäuses 3 an der Rückwand je eine weitere Lautsprecherbox 7 angeordnet, die einen oder mehrere Mittelton-Lautsprecher 8 aufweist. Das Gehäuse der Box 7 ist luftdicht abgeschlossen und der Form der Rückwand 2 angepaßt, um bei geringen räumlichen Abmessungen ein großes Volumen für das Boxengehäuse 7 zu schaffen. Der Lautsprecher 8 hat einen Durchmesser von 130 mm. Die Abstrahlung erfolgt zur Seite, also etwa senkrecht zur Seitenwand 9 des Gehäuses 1.

## 3. Hoher Freqenzbereich von 4 kHz - 20 kHz (Tweeter)

Für die Wiedergabe der Höhen ist an der Vorderseite des Gehäuses 1 unten links und rechts der Bildröhre je ein Hochton-Lautsprecher 10 vorgesehen, der eine Kalotte aus Titanium aufweist und zu Verbesserung der Wärmeabfuhr im Bereich Luftspaltes mit einer magnetischen Flüssigkeit gefüllt ist. Die beiden Hochton-Lautsprecher 10 haben eine Abstrahlrichtung nach vorne, also senkrecht zur Vorderwand des Gehäuses 1.

Fig. 2 zeigt in einem waagerechten Schnitt durch Fig. 1 im Prinzip die Mittelton-Lautsprecherbox 7 mit dem Mittelton-Lautsprecher 8. Die äußere Form des Boxengehäuses 7 ist der Form der Rückwand 2 angepaßt, um eine optimale Raumausnutzung bei geringen äußeren geometrischen Abmessungen zu erzielen. Der Lautsprecher 8 liegt somit noch hinter der hinteren Kante 11 der die Zarge bildenden Seitenwand 9, die eine Breite von etwa 200 - 220 mm aufweist.

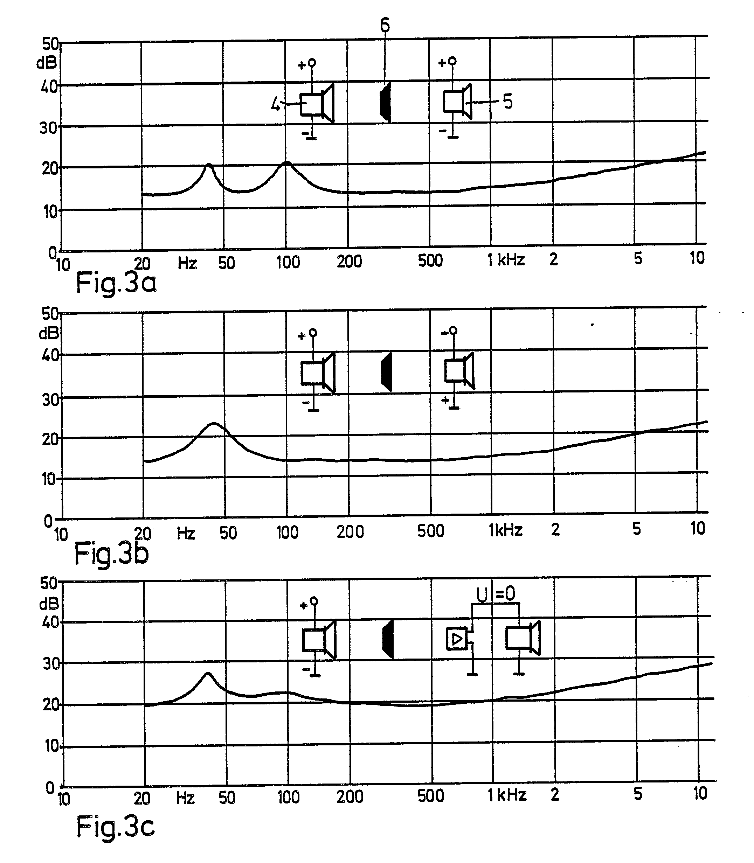

Fig. 3 zeigt den Impedanzverlauf der Lautsprecherbox 3 für drei verschiedene Betriebsarten der Lautsprecher 4, 5 angedeutet durch die Vorzeichen " + "und "-".

3a Jede Schwingspule der beiden Lautsprecher 4, 5 wird von je einem Stereokanal mit gleichem Signal gleichphasig angetrieben.

3b Jede Schwingspule wird von je einem Stereokanal mit gleichem Signal gegenphasig angetrieben.

3c Eine Schwingspule wird angetrieben, die andere vom Innenwiderstand eines angeschlossenen Verstärkers ohne Signal bedämpft.

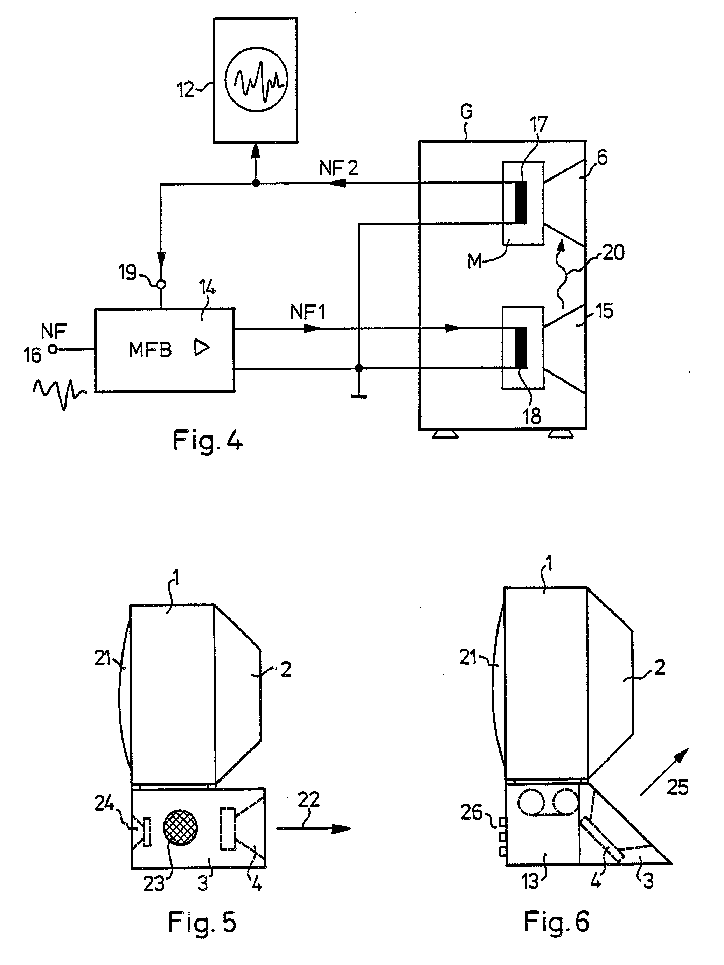

In Figur 4 sind in dem Lautsprechergehäuse G zwei Lautsprecher 6, 15 angeordnet. Ein NF-Signal gelangt von der Klemme 16 über die einen Verstärker enthaltene Schaltung 14 als Signal NF1 auf die Schwingspule 18 des Lautsprechers 15, so daß dieser in üblicher Weise angesteuert wird und zur Tonwiedergabe dient. Die Schwingspule 17 des Lautsprechers 6 wird nicht mit einem elektrischen NF-Signal angesteuert. Vielmehr wird die Membran des Lautsprechers 6 von dem Lautsprecher 15 pneumatisch angetrieben, wie durch die Schallwelle 20 symbolisch dargestellt ist. Der Lautsprecher 6 wirkt dadurch als sogenannter Passivstrahler und ist trotz des fehlenden elektrischen Antriebes durch ein NF-Signal in vorteilhafter Weise an der Tonwiedergabe beteiligt. Durch die Bewegung der Membran des Lautsprechers 6 wird in der Schwingspule 17 eine Spannung NF2 induziert. Die Spannung NF2 entspricht grundsätzlich nicht der Spannung NF1, sondern der tatsächlichen Bewegung der Membran des Lautsprechers 6. NF2 ist an die Steuerklemme 19 der Schaltung 14 angelegt und bewirkt dort eine von der Membranbewegung gesteuerte Rückkopplung für das Signal NF1 in dem Sinne, daß eine weitestgehende Übereinstimmung zwischen der tatsächlichen Membranbewegung des Lautsprechers 15 und dem Signal NF1 erreicht und somit Nichtlinearitäten des Lautsprechers durch eine Vorverzerrung des Signals NF1 ausgeglichen werden. In der Schaltung 14 erfolgt somit ein Soll/Ist-Vergleich zwischen der gewünschten Bewegung der Membran des Lautsprechers 15, darge stellt durch NF1, und der tatsächlichen Bewegung der Membran, dargestellt durch NF2, und eine entsprechende Vorverzerrung von NF1. Derartige Schaltungen mit einer bewegungsabhängigen Rückkopplung für das Signal, auch MFB (motional feedback) genannt, sind bekannt und z.B. näher beschrieben in der DE-OS 28 53 676 und dem Buch "Lautsprecherbuch" von Jörg Jecklin, Telekosmos-Verlag, Francksche-Verlagsbuchhandlung, Stuttgart 1967, Kapitel 9.4, Seite 129 - 130.

Die Spannung NF2 ist zusätzlich als Steuerspannung an den Signal-Indikator 12 angelegt. Dieser kann z.B. ein Oszilloskop zur Darstellung der Lautsprecher-Membran-Bewegung, eine psychodelische Beleuchtung, eine Überlastanzeige, also eine Schaltung mit Gleichrichtung und Schwellwerteigenschaft, eine entsprechend dem NF-Signal betätigte Wasserorgel oder dgl. sein.

Fig. 5 zeigt von einem Fernsehempfänger das Gehäuse 1, die Rückwand 2 und den Bildschirm 21. Unterhalb des Gehäuses 1 ist die Lautsprecherbox 3 angeordnet. Diese enthält an der Hinterseite an den beiden Seiten zwei Tiefton-Lautsprecher 4 und dazwischen einen Passivstrahler. Die Schall-Abstrahlrichtung 22 der Lautsprecher 4 und des Passivstrahlers ist waagerecht nach hinten gerichtet. Die Box 3 enthält außerdem zwei zur Seite hin abstrahlenden Mitteltöner 23 und einen oder mehrere nach vorne abstrahlende Hochtöner 24.

In Fig. 6 sind die Lautsprecher 4 und der Passivstrahler geneigt angeordnet, so daß die Abstrahlrichtung 25 nach hinten schräg nach oben gerichtet ist. Außerdem enthält die Box 3 einen Videorecorder 13, der über die Bedienelemente 26 von der Vorderseite bedienbar ist.

Zwischen dem Gehäuse 1 des Fernsehempfängers und der Box 3 können elektrische Steckverbindungen vorgesehen sein, die beim Aufsetzen des Gehäuses 1 auf die Box 3 in Eingriff gelangen und die Lautsprecher 4 und den Videorecorder 13 beim Aufsetzen selbsttägig mit der Schaltung des Fernsehempfängers verbinden. Die Lautsprecher 4, der Passivstrahler, der Videorecorder 13 und der Fernsehempfänger können auch in einem gemeinsamen Gehäuse angeordnet sein.

Das Gehäuse 1 kann in Fig. 5 oder 6 auf der Box 3 mittels eines Axial-Kugellagers um eine vertikale Achse drehbar gelagert sein. Dann kann der Fernsehempfänger, steuerbar durch die Fernbedienung, in verschiedene Richtungen geschwenkt werden, was besonders für große Wohnräume, Hotels und dgl. zweckmäßig sein kann.

**Ansprüche**

1. Tiefton-Lautsprecher für einen Fernsehempfänger, eine HiFi-Anlage, ein Kraftfahrzeug oder dgl. **dadurch gekennzeichnet**, daß in einem Gehäuse (3) zwei von je einem Stereokanal getrennt gesteuerte Tieftonlautsprecher (4, 5) und ein beiden Lautsprechern (4, 5) gemeinsamer Passivstrahler (6) angeordnet sind.

2. Box nach Anspruch 1, **dadurch gekennzeichnet**, daß der Passivstrahler (6) in der Mitte zwischen den beiden Lautsprechern (4, 5) angeordnet ist.

3. Box nach Anspruch 1, **dadurch gekennzeichnet**, daß das Gehäuse (3) an der hinteren oberen Seite eines Fernsehempfängergehäuses (1) angeordnet ist.

4. Box nach Anspruch 3, **dadurch gekennzeichnet**, daß zu beiden Seiten des Boxengehäuses (3) an dem Empfängergehäuse (1) zwei weitere Mittelton-Lautsprecherboxen (7) mit Schallabstrahlrichtung zur Seite angeordnet sind.

5. Box nach Anspruch 1, **dadurch gekennzeichnet**, daß der Passivstrahler durch einen Lautsprecher (6) mit Magnetsystem (M) und Schwingspule (17) gebildet und die in der Schwingspule (17) induzierte Spannung (NF2) als Steuerspannung für eine Signalrückkopplung (MFB) und/oder einen Signal-Indikator (12) ausgenutzt ist (Fig. 4).

6. Box nach Anspruch 5, **dadurch gekennzeichnet**, daß die Steuerspannung (NF2) für eine von der Membranbewegung gesteuerte Rückkopplung für das NF-Signal(MFB) ausgenutzt ist (Schaltung 14 in Fig. 4).

7. Box nach Anspruch 1, **dadurch gekennzeichnet**, daß die Box (3) unterhalb des Gehäuses (1) eines Fernsehempfängers angeordnet ist (Fig. 5, 6).

8. Box nach Anspruch 7, **dadurch gekennzeichnet**, daß das Gehäuse (1) des Fernsehempfängers an der Unterseite und die vom Gehäuse des Fernsehempfängers (1) getrennte Box (3) an der Oberseite eine elektrische Steckverbindung zum Anschluß der Lautsprecher an die Schaltung des Fernsehempfängers aufweisen (Fig. 5, 6).

9. Box nach Anspruch 5, **dadurch gekennzeichnet**, daß die Box (3) mit einem Videorecorder (13) kombiniert ist (Fig. 5, 6).

10. Box nach Anspruch 5, **dadurch gekennzeichnet**, daß das Gehäuse (1) des Fernsehempfängers um eine vertikale Achse schwenkbar auf der Box (3) gelagert ist (Fig. 5, 6).

Fig. 1

Fig. 2

Fig.3a

Fig.3b

Fig.3c

Fig. 4

Fig. 5

Fig. 6